# EUROPÄISCHE PATENTANMELDUNG

(11) **EP 4 438 269 A1**
(43) Veröffentlichungstag der Anmeldung: **02.10.2024**
(21) Anmeldenummer: 23165467.4
(22) Anmeldetag: 30.03.2023
(51) Int. Cl.: B29C 64/106, B29C 64/245, B29C 64/295, B29C 64/40, B33Y 10/00, B33Y 30/00, B29C 64/30, B33Y 40/00, B29C 64/112, B29C 64/379

(54) **AUTOMATISCHE BAUTEILENTFERNUNG**

(71) Anmelder: Ivoclar Vivadent AG, 9494 Schaan (LI)
(72) Erfinder: Hendrik, John, 9470 Buchs (DE)
(74) Vertreter: Baldus, Oliver

(57) **Zusammenfassung**

Die vorliegende Erfindung betrifft ein Verfahren zum Drucken eines dreidimensionalen Bauteils (101), mit den Schritten eines Erwärmens (S101) einer Bauplattform zum Schmelzen einer Materialkomponente, um einen Gleitfilm zwischen dem Bauteil und der Bauplattform zu bilden; und Entfernen (S102) des Bauteiles (101) von der Bauplattform.

## Beschreibung

Die vorliegende Erfindung betrifft ein Verfahren zum Drucken eines dreidimensionalen Bauteils, eine Bauplattform für eine Druckvorrichtung und eine Druckvorrichtung zum Drucken eines dreidimensionalen Bauteils.

Bei den derzeit bekannten Inkjet-3D-Druckern werden die gedruckten Bauteile mit einem Spatel oder anderweitig mechanisch von der Bauplattform entfernt; dies erfolgt bei Verbleib der Bauplattform im Drucker oder nach Entnahme der Bauplattform aus dem Drucker. Danach wird die Bauplattform gereinigt, ggf. wieder im Drucker eingesetzt. Dies erfordert eine Vielzahl von manuellen Arbeitsschritten und bedingt eine Unterbrechung des Arbeitsablaufes.

Es ist die technische Aufgabe der vorlinden Erfindung, die fertig gedruckten Bauteile nach Beendigung des Druckens automatisch von der Bauplattform zu entfernen und so die Bauplattform für den folgenden Druckprozess bereit zu machen.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Drucken eines dreidimensionalen Bauteils gelöst, mit den Schritten eines Erwärmens einer Bauplattform zum Schmelzen einer Materialkomponente, um einen Gleitfilm zwischen dem Bauteil und der Bauplattform zu bilden; und Entfernen des Bauteiles von der Bauplattform. Durch das Verfahren wird ein kontinuierliches Drucken von Bauteilen ohne manuellen Eingriff ermöglicht.

In einer technisch vorteilhaften Ausführungsform des Verfahrens ist die Materialkomponente in einer Stützstruktur des Bauteiles intergiert. Dadurch wird beispielsweise der technische Vorteil erreicht, dass auf einfache Weise unter dem Bauteil ein Gleitfilm beim Erwärmen der Bauplattform erzeugt werden kann.

In einer weiteren technisch vorteilhaften Ausführungsform des Verfahrens ist die Materialkomponente auf die Bauplattform aufgetragen. Dadurch wird beispielsweise der technische Vorteil erreicht, dass auch nicht schmelzbares Stützstrukturmaterial verwendet werden kann.

In einer weiteren technisch vorteilhaften Ausführungsform des Verfahrens wird die schmelzbare Materialkomponente großflächig über die gesamte Bauplattform oder selektiv unterhalb des Bauteiles angeordnet. Dadurch wird beispielsweise ebenfalls der technische Vorteil erreicht, dass das Bauteil an unterschiedlichen Stellen auf der Bauplattform aufgebaut werden kann.

In einer weiteren technisch vorteilhaften Ausführungsform des Verfahrens erfolgt der selektive Auftrag der schmelzbaren Materialkomponente durch ein integriertes Inkjet-Modul. Dadurch wird beispielsweise der technische Vorteil erreicht, dass das bereits vorhandene Inkjet-Module zum Auftrag genutzt werden können. Im Allgemeinen kann aber auch ein Stereolithografie-Modul, ein Schmelzschichtung-Modul (FDM - Fused Deposition Modeling) oder jedes andere Modul verwendet werden, das zum Auftragen der schmelzbaren Materialkomponente geeignet ist.

In einer weiteren technisch vorteilhaften Ausführungsform des Verfahrens wird das Bauteil auf dem Gleitfilm von der Bauplattform geschoben. Dadurch wird beispielsweise der technische Vorteil erreicht, dass das Bauteil effizient von der Bauplattform entfernt werden kann.

In einer weiteren technisch vorteilhaften Ausführungsform des Verfahrens umfasst die schmelzbare Materialkomponente Polyethylenglykol, Polyvinylacetat, Paraffin oder Wachs. Dadurch wird beispielsweise der technische Vorteil erreicht, dass sich das Material leicht anschmelzen lässt.

In einer weiteren technisch vorteilhaften Ausführungsform des Verfahrens wird die schmelzbare Materialkomponente nach dem Entfernen des Bauteiles von der Bauplattform entfernt. Dadurch wird beispielsweise der technische Vorteil erreicht, dass die Bauplattform für einen weiteren Bauauftrag verwendet werden kann. Dies hat zusätzlich den technischen Vorteil, dass ein kontrollierter Auftrag der schmelzbaren Materialkomponente gewährleistet werden kann oder die Bauplattform auch ohne die schmelzbare Materialkomponente für einen weiteren Auftrag verwendet werden.

In einer weiteren technisch vorteilhaften Ausführungsform des Verfahrens wird die Bauplattform nach dem Entfernen des Bauteils gekühlt. Dadurch wird beispielsweise der technische Vorteil erreicht, dass die Bauplattform schneller wieder für einen weiteren Bauauftrag zu Verfügung steht.

In einer weiteren technisch vorteilhaften Ausführungsform des Verfahrens wird die schmelzbare Materialkomponente von dem Bauteil entfernt. Dadurch wird beispielsweise der technische Vorteil erreicht, dass das Bauteil weiterverarbeitet werden kann.

Gemäß einem zweiten Aspekt wird die technische Aufgabe durch eine Bauplattform für eine Druckvorrichtung gelöst, die eine Heizeinrichtung zum Schmelzen einer schmelzbaren Materialkomponente umfasst, um einen Gleitfilm zwischen dem Bauteil und der Bauplattform zu bilden. Durch die Bauplattform werden die gleichen technischen Vorteile wie durch das Verfahren nach dem ersten Aspekt erreicht.

Gemäß einem dritten Aspekt wird die technische Aufgabe durch eine Druckvorrichtung zum Drucken eines dreidimensionalen Bauteils gelöst, mit einer Bauplattform nach dem ersten Aspekt. Durch die Druckvorrichtung werden die gleichen technischen Vorteile wie durch das Verfahren nach dem ersten Aspekt erreicht.

In einer technisch vorteilhaften Ausführungsform der Druckvorrichtung umfasst die Druckvorrichtung eine Auftragungsvorrichtung zum Auftragen der schmelzbaren Materialkomponente auf die Bauplattform. Dadurch wird beispielsweise der technische Vorteil erreicht, dass die Bauplattform automatisch mit der schmelzbaren Materialkomponente versehen werden kann.

In einer weiteren technisch vorteilhaften Ausführungsform der Druckvorrichtung umfasst die Druckvorrichtung eine Schiebevorrichtung zum Schieben des Bauteiles von der Bauplattform. Dadurch wird beispielsweise der technische Vorteil erreicht, dass das Bauteil schnell entfernt werden kann. Zusätzlich kann vorgesehen sein, dass zwischen den Bauteil und der Bauplattform ein Stützstruktur vorgesehen ist, die auch wie im oben erwähnten technischen Vorteil zum Tragen kommen kann und somit das Bauteil mitsamt der Stützstruktur automatisch entfernt werden kann.

In einer weiteren technisch vorteilhaften Ausführungsform der Druckvorrichtung umfasst die Druckvorrichtung eine Öffnung im Gehäuse zum Auswurf des Bauteils. Das Bauteil kann nach dem Auswurf in einem Auffangbehälter oder einer Auffangvorrichtung aufgenommen werden. Dadurch wird beispielsweise der technische Vorteil erreicht, dass keine manuelle Entnahme des Bauteils mitsamt Stützstruktur aus der Druckvorrichtung erforderlich ist und so der Druckvorgang nicht gestört wird.

In einer weiteren technisch vorteilhaften Ausführungsform der Druckvorrichtung umfasst die Druckvorrichtung eine Entfernungsvorrichtung zum Entfernen des Gleitfilms von der Bauplattform. Dadurch wird beispielsweise der technische Vorteil erreicht, dass die Bauplattform für einen neuen Druckauftrag bereitsteht.

In einer weiteren technisch vorteilhaften Ausführungsform der Druckvorrichtung ist die Entfernungsvorrichtung durch eine Klinge gebildet. Dadurch wird beispielsweise der technische Vorteil erreicht, dass die schmelzbare Materialkomponente gleichmäßig oder restlos entfernt werden kann und die Bauplattform für den nächsten Bauauftrag bereit ist.

Ausführungsbeispiele der Erfindung sind in den Zeichnungen dargestellt und werden im Folgenden näher beschrieben.

Es zeigen:
- Fig. 1: eine schematische Ansicht eines Bauteils mit einer Stützstruktur aus einem schmelzbaren Material;
- Fig. 2: eine schematische Ansicht eines Bauteils auf einem als Schicht aufgetragenen, schmelzbaren Material;
- Fig. 3: eine weitere schematische Ansicht eines Bauteils auf einem als Schicht aufgetragenen, schmelzbaren Material;
- Fig. 4: eine weitere schematische Ansicht eines Bauteils auf einem als Schicht aufgetragenen, schmelzbaren Material;
- Fig. 5: eine schematische Ansicht einer Druckvorrichtung mit einer wiederverschließbaren Öffnung;
- Fig. 6: eine schematische Ansicht einer zum Gleitfilm angeschmolzene Materialkomponente;
- Fig. 7: eine schematische Ansicht einer Druckvorrichtung mit einer geöffneten, wiederverschließbaren Öffnung; und
- Fig. 8: ein Blockdiagramm eines Verfahrens zum Drucken eines dreidimensionalen Bauteils.

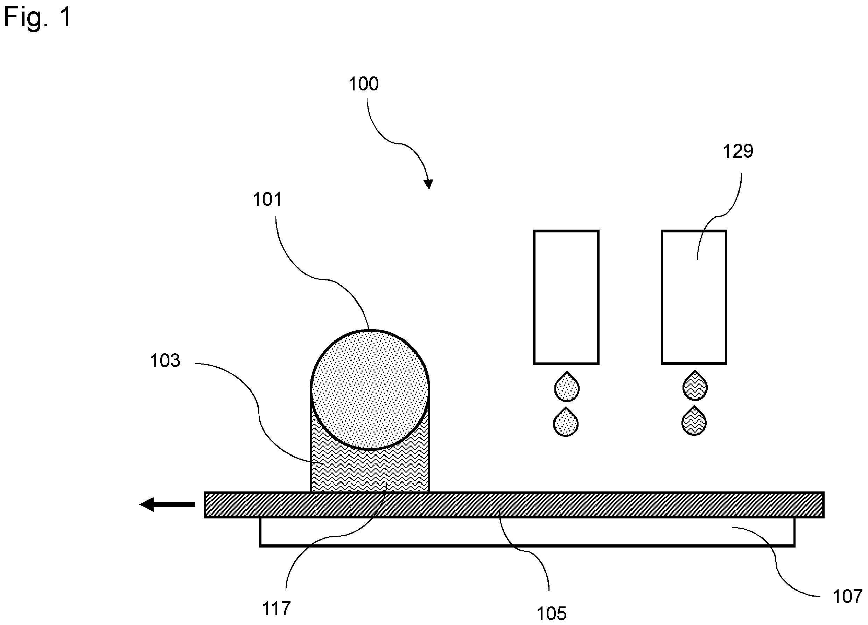

Fig. 1 zeigt eine schematische Ansicht eines Bauteils 101 mit einer Stützstruktur 103 aus einer schmelzbaren Materialkomponente 117. Das Bauteil 101 wird auf der Bauplattform 105 aus einem Material aufgebaut, das mittels eines Inkjet-Verfahrens aufgetragen wird. Für das Bauteil 101 wird eine Stützstruktur 103 aus einer schmelzbaren Materialkomponente 117 verwendet, das ebenfalls mittels des Inkjet-Verfahrens mittels einer Druckdüse 129 aufgetragen wird. Im Allgemeinen kann das Bauteil 101 aber auch mittels eines anderen Verfahrens aufgebaut werden.

Bei der Auswahl eines Stützmaterials mit einer schmelzbaren Materialkomponente 117 nach dem Drucken des Bauteils 101 kann die Bauplattform 105 kurzzeitig aufgeheizt werden, damit das Stützmaterial 103 anschmilzt und so ein Gleitfilm 125 zwischen Bauteil 101 und Bauplattform 105 entsteht. Zu diesem Zweck umfasst die Druckvorrichtung 100 eine Heizeinrichtung 107, die die Bauplattform 105 erwärmt. Die Heizeinrichtung 107 ist beispielsweise eine elektrische Heizeinrichtung, die durch die Druckvorrichtung 100 gesteuert wird.

Das Bauteil 101 mitsamt der Stützstruktur 103 wird dann, sobald das Stützmaterial auf der Bauplattformoberfläche angeschmolzen ist, mittels einer Rakel von der Bauplattform 105 durch eine Luke aus der Druckvorrichtung 100 in ein Auffanggefäß geschoben.

Dadurch dass durch die Erwärmung ein Gleitfilm 125 zwischen der Bauplattform 105 und dem Bauteil 101 entsteht, ist der Kraftaufwand zum Herunterschieben des Bauteils 101 mitsamt Stützstruktur 103 von der Bauplattform minimal und das Bauteil 101 wird mechanisch nicht belastet.

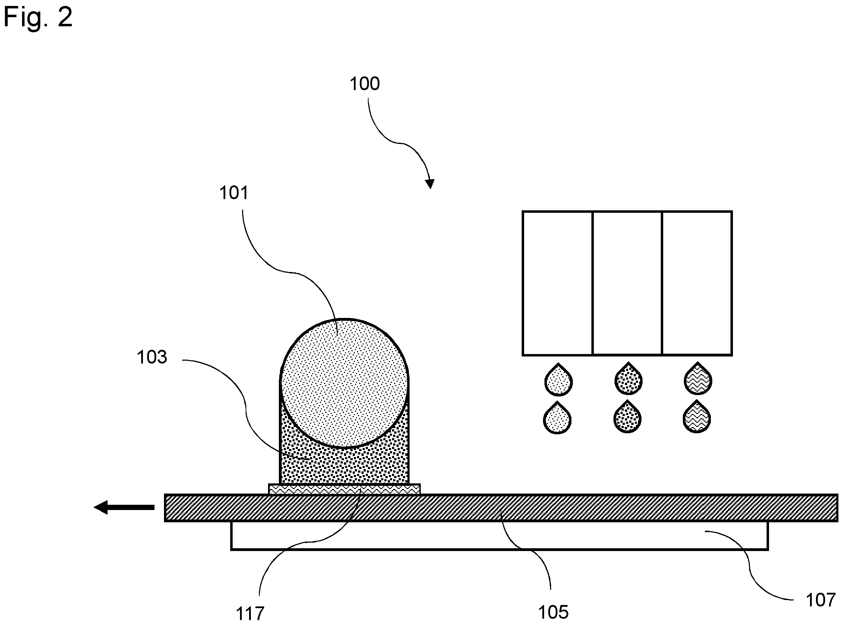

Fig. 2 zeigt eine schematische Ansicht eines Bauteils 101 auf einer als Schicht aufgetragenen, schmelzbaren Materialkomponente 117. Die Materialkomponente 117 wird mittels des Inkjet-Verfahrens als Schicht auf der Bauplattform 105 aufgetragen. Auf dieser Schicht werden die Stützstruktur 103 aus Stützmaterial und auf der Stützstruktur 103 das Bauteil 101 aus einem Baumaterial mittels des Inkjet-Verfahrens aufgebaut.

Die Materialkomponente 117 kann auch als separates, aufschmelzbares Material dünn auf die Bauplattform 105 aufgetragen werden. Die Auftragung kann großflächig über die gesamte Bauplattform 105 oder selektiv unterhalb des Bauteils 101 erfolgen.

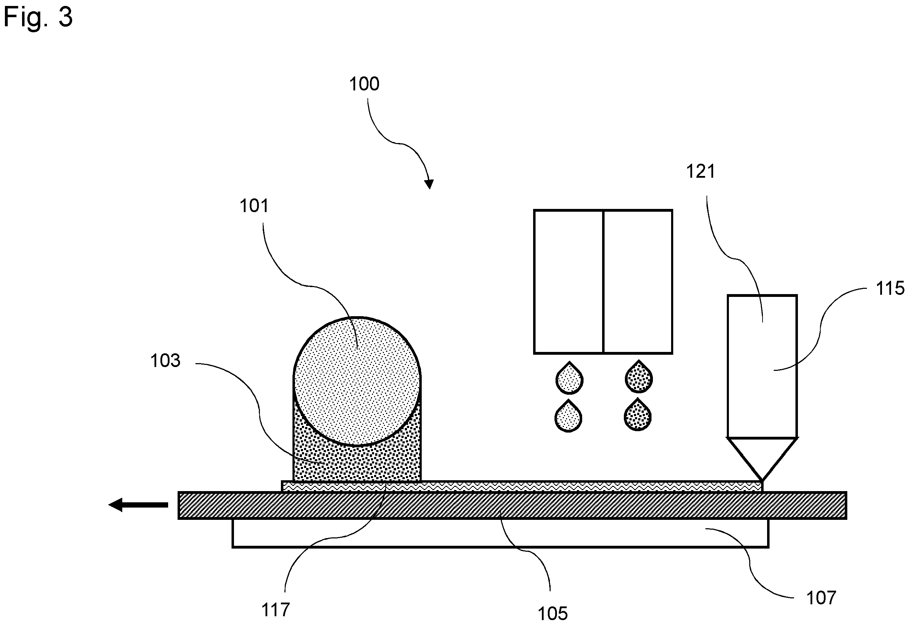

Fig. 3 zeigt eine weitere schematische Ansicht eines Bauteils 101 auf einer als Schicht aufgetragenen, schmelzbaren Materialkomponente 117. Die Materialkomponente 117 wird mittels eines Schlitz-Dispensers 121 als Auftragungsvorrichtung 115 großflächig auf die Bauplattform 105 aufgetragen. Auf der Materialkomponente 117 werden die Stützstruktur 103 mittels des Inkjet-Verfahrens und auf der Stützstruktur 103 das Bauteil 101 aus einem Baumaterial mittels des Inkjet-Verfahrens aufgebaut.

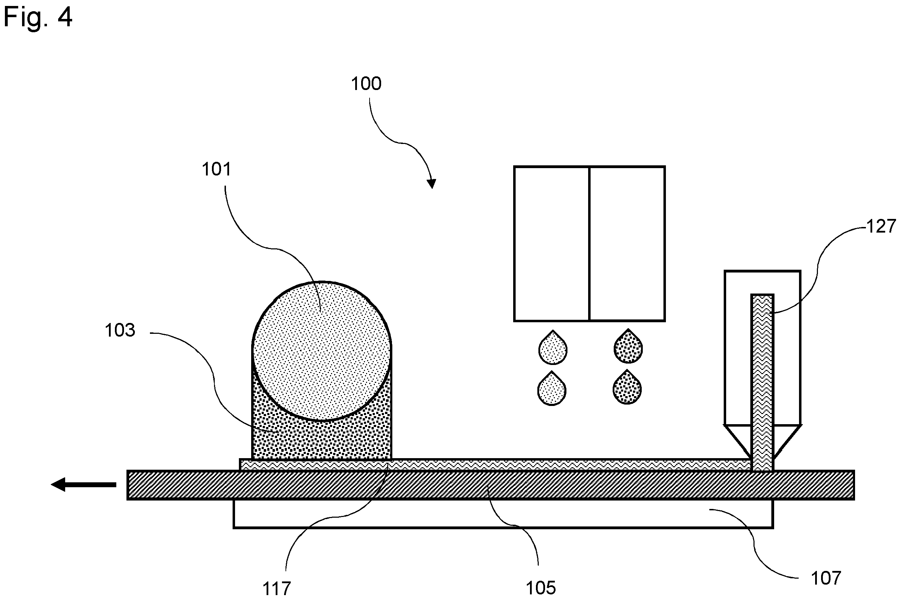

Fig. 4 zeigt eine weitere schematische Ansicht eines Bauteils 101 auf einer als Schicht aufgetragenen, schmelzbaren Materialkomponente 117. Die Materialkomponente 117 ist großflächig auf der Bauplattform 105 aufgetragen. Zu diesem Zweck wird die beheizte Bauplattform 105 unterhalb einer Wachsplatte entlanggeführt, die in einem Schacht 127 gehalten wird. Auf diese Weise schmilzt die Wachsplatte stirnseitig oder am Fuß auf die Bauplattform 105 auf. Dadurch wird ein dünner Wachsfilm auf der Bauplattform 105 aufgetragen. Das Bauteil 101 erfolgt dann mittels des Bauteilmaterials und Stützmaterials auf dem dünnen Wachsfilm, der zur automatischen Entfernung des Bauteils 101 schließlich wieder angeschmolzen wird.

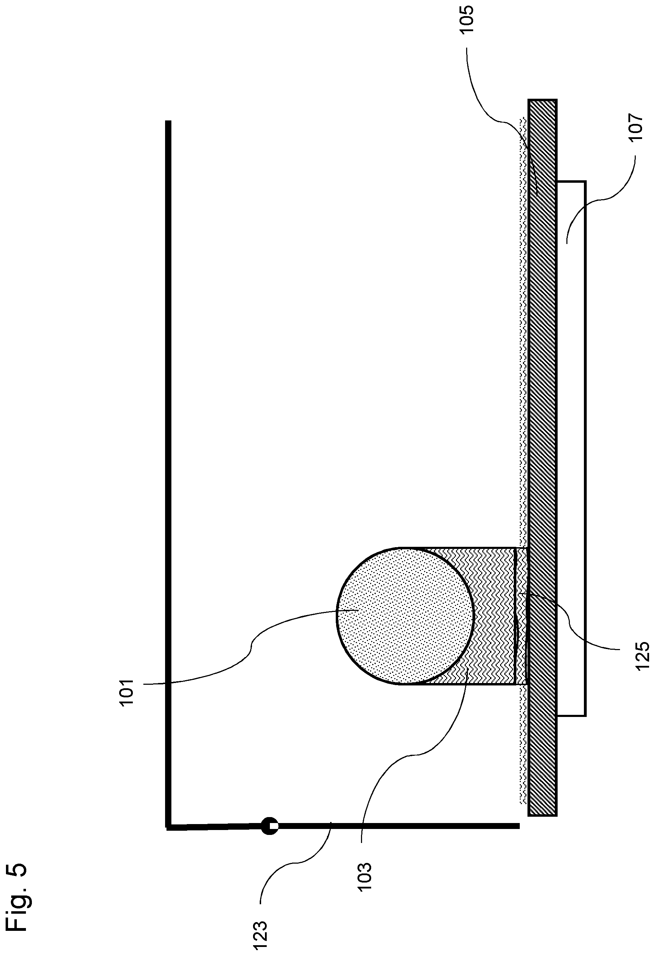

Fig. 5 zeigt eine Druckvorrichtung 100 mit einer wiederverschließbaren Öffnung mit einer drehbaren Klappe 123. Über die Klappe 123 kann das Bauteil 101 aus der Druckvorrichtung 100 bewegt werden. Auf der temporär beheizten Bauplattform 105 wird nach Beendigung des Bauauftrags die unterste Schicht der Stützstruktur 103 angeschmolzen, so dass aus der schmelzbaren Materialkomponente 117 ein Gleitfilm 125 entsteht.

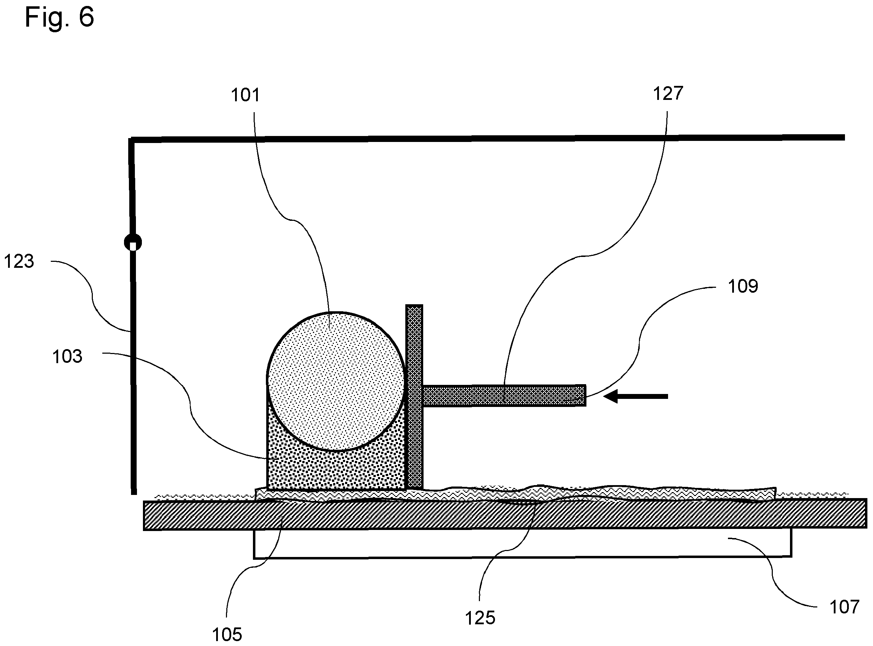

Fig. 6 zeigt die zum Gleitfilm 125 angeschmolzene Materialkomponente 117 durch die temporär beheizte Bauplattform 105. Eine Rakel 127 als Schiebevorrichtung 109 schiebt das Bauteil 101 zusammen mit der Stützstruktur 103 von der Bauplattform 105. Die Schiebevorrichtung 109 schiebt das Bauteil 101 in horizontaler Richtung auf dem Gleitfilm 125 aus der erwärmten Materialkomponente 117 von der Bauplattform 105.

Nach dem Entfernen des Bauteils 101 durch die Rakel 127 verbleiben keine störenden Rückstände des Stützmaterials auf der Bauplattform 105. Die Rakel 127 weist im Kontakt mit der Bauplattform 105 beispielsweise eine Klinge auf, die als eine Metallklinge oder eine Silikonklinge ausgebildet ist.

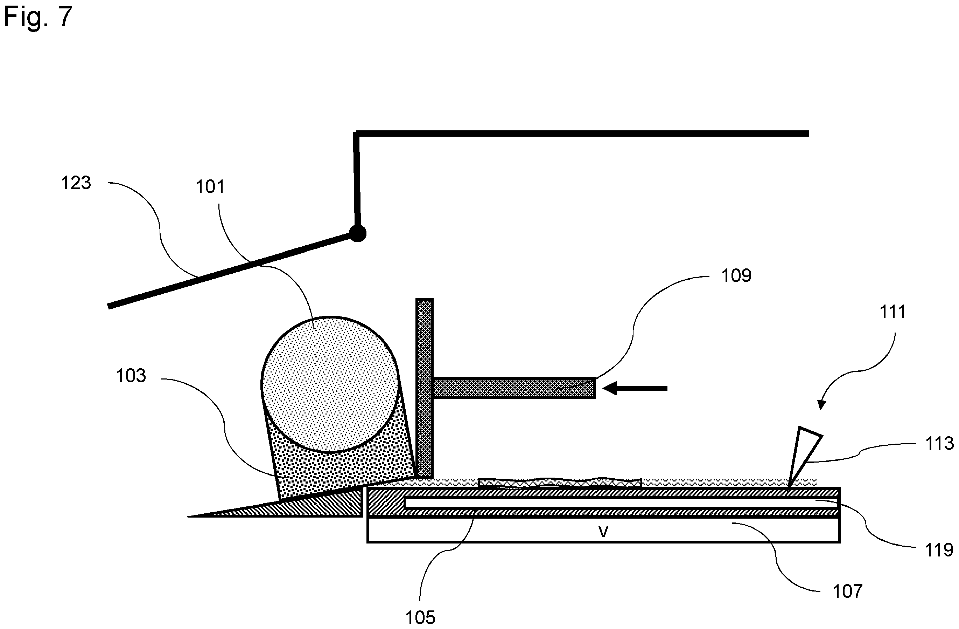

Fig. 7 zeigt wie das Bauteil samt Stützstruktur durch die geöffnete, wiederverschließbaren Klappe 123 von der Bauplattform 105 aus der Druckvorrichtung 100 geschoben wird. Die Klappe 123 ist seitlich in einer der beiden Endpositionen angeordnet und wird durch den Rakelmechanismus automatisch geöffnet, damit das Bauteil 101 unbeschädigt von der Bauplattform 105 aus der Druckvorrichtung 100 heraus befördert werden kann.

Außerhalb der Druckvorrichtung 100 kann ein Auffangbehälter oder ein Fördermechanismus angeordnet sein, um das Bauteil 101 aufzunehmen oder an einen weiteren Ort zu befördern, an dem dieses beispielsweise von Stützmaterial befreit, gereinigt und nachbearbeitet wird.

Zusätzlich umfasst die Druckvorrichtung 100 eine Entfernungsvorrichtung 111, die durch eine langgezogene Klinge 113 gebildet ist. Die Klinge 113 ist in Kontakt mit der Bauplattform 105.Die Bauplattform 105 und die Klinge 113 werden so gegeneinander verfahren, dass dabei der Gleitfilm 125 abgestreift wird. Danach kann mit einem erneuten Auftrag der schmelzbaren Materialkomponente und/oder dem erneuten Aufbauen eines weiteren Bauteils 101 fortgefahren werden.

Die Bauplattform 105 kann nach dem Entfernen des Bauteils 101 mittels einer Kühlvorrichtung 119, wie beispielsweise einen Wasserkreislauf oder einen Peltier-Element gekühlt werden. Dadurch kann die Bauplattform 105 schnell wieder für den nächsten Druckauftrag verwendet werden, ohne dass sich anfänglich ein Gleitfilm 125 bildet.

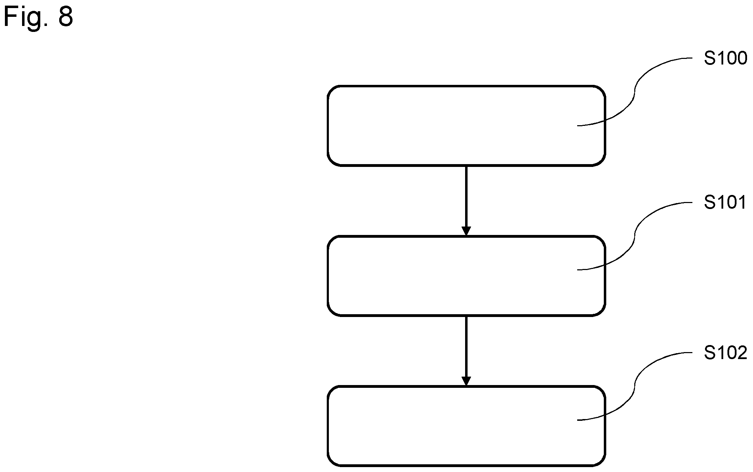

Fig. 8 zeigt ein Blockdiagramm eines Verfahrens zum Drucken des dreidimensionalen Bauteils. In Schritt S100 wird eine schmelzbare Materialkomponente 117 auf die Bauplattform 105 aufgetragen. Die Materialkomponente 117 kann als Schicht auf der Bauplattform 105 aufgetragen werden oder in einer Stützstruktur 103 des Bauteils 105 integriert sein. Nach dem Ende des Druckens wird in Schritt S101 die Bauplattform 105 erhitzt, um die Materialkomponente 117 zu schmelzen. Dadurch entsteht ein Gleitfilm 125 zwischen dem Bauteil 101 und der Bauplattform 105. In Schritt S102 wird das Bauteil 101 von der Bauplattform 105 geschoben.

Durch das Verfahren können fertig gedruckte Bauteile 101 nach Beendigung des Druckauftrags von der Bauplattform 105 automatisch entfernt werden. Dadurch wird die Bauplattform 105 für das folgende Bauteil 101 bereit gemacht. Dadurch wird ein kontinuierliches Drucken von Bauteilen 101 ohne manuellen Eingriff ermöglicht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Druckvorrichtung
- 101: Bauteil
- 103: Stützstruktur
- 105: Bauplattform
- 107: Heizeinrichtung
- 109: Schiebevorrichtung
- 111: Entfernungsvorrichtung
- 113: Klinge
- 115: Auftragungsvorrichtung
- 117: Materialkomponente
- 119: Kühlvorrichtung
- 121: Schlitz-Dispenser
- 123: Klappe
- 125: Gleitfilm
- 127: Schacht
- 129: Druckdüse

## Patentansprüche

1. Verfahren zum Drucken eines dreidimensionalen Bauteils (101), mit den Schritten:
- Erwärmen (S101) einer Bauplattform (105) zum Schmelzen einer Materialkomponente (117), um einen Gleitfilm (125) zwischen dem Bauteil (101) und der Bauplattform (105) zu bilden; und
- Entfernen (S102) des Bauteiles (101) von der Bauplattform.

2. Verfahren nach Anspruch 1, wobei die Materialkomponente (117) in einer Stützstruktur (103) des Bauteiles (101) intergiert ist.

3. Verfahren nach einem der vorangehenden Ansprüche, wobei die Materialkomponente (117) auf die Bauplattform (105) aufgetragen ist.

4. Verfahren nach Anspruch 3, wobei die schmelzbare Materialkomponente (117) großflächig über die gesamte Bauplattform (105) oder selektiv unterhalb des Bauteiles (101) angeordnet wird.

5. Verfahren nach einem der vorangehenden Ansprüche, wobei das Bauteil (101) auf dem Gleitfilm (125) von der Bauplattform (105) geschoben wird.

6. Verfahren nach einem der vorangehenden Ansprüche, wobei die schmelzbare Materialkomponente (117) Polyethylenglykol, Polyvinylacetat, Paraffin oder Wachs umfasst.

7. Verfahren nach einem der vorangehenden Ansprüche, wobei die schmelzbare Materialkomponente (117) nach dem Entfernen des Bauteiles (101) von der Bauplattform (105) entfernt wird.

8. Verfahren nach einem der vorangehenden Ansprüche, wobei die Bauplattform (105) nach dem Entfernen des Bauteils (101) gekühlt wird.

9. Bauplattform (105) für eine Druckvorrichtung (100), die eine Heizeinrichtung (107) zum Schmelzen einer schmelzbaren Materialkomponente (117) umfasst, um einen Gleitfilm (125) zwischen dem Bauteil (101) und der Bauplattform (105) zu bilden.

10. Druckvorrichtung (100) zum Drucken eines dreidimensionalen Bauteils (101), mit einer Bauplattform (105) nach Anspruch 9.

11. Druckvorrichtung (100) nach Anspruch 10, wobei Druckvorrichtung (100) eine Auftragungsvorrichtung (115) zum Auftragen der schmelzbaren Materialkomponente (117) auf die Bauplattform (105) umfasst.

12. Druckvorrichtung (100) nach Anspruch 10 oder 11, wobei die Druckvorrichtung (100) eine Schiebevorrichtung (109) zum Schieben des Bauteiles (101) von der Bauplattform (105) umfasst.

13. Druckvorrichtung (100) nach einem der Ansprüchen 10 bis 12, wobei die Druckvorrichtung (100) eine Öffnung (123) im Gehäuse zum Auswurf des Bauteils (101) umfasst.

14. Druckvorrichtung (100) nach einem der Ansprüche 11 bis 13, wobei die Druckvorrichtung (100) eine Entfernungsvorrichtung (111) zum Entfernen des Gleitfilms (125) von der Bauplattform (105) umfasst.

15. Druckvorrichtung (100) nach Anspruch 14, wobei die Entfernungsvorrichtung (111) durch eine Klinge (113) gebildet ist.
